Europäisches Patentamt

(19) European Patent Office

Office européen des brevets

(11) Publication number: **0 054 084**
**B1**

(12) **EUROPEAN PATENT SPECIFICATION**

(45) Date of publication of patent specification: **27.03.85**

(21) Application number: **80201190.8**

(22) Date of filing: **11.12.80**

(51) Int. Cl.⁴: **B 29 D 3/02**

(54) **Process for the manufacture of reinforced products of synthetic material.**

(43) Date of publication of application:
**23.06.82 Bulletin 82/25**

(45) Publication of the grant of the patent:
**27.03.85 Bulletin 85/13**

(84) Designated Contracting States:
**BE FR GB IT SE**

(56) References cited:
**DE-A-1 954 070**
**DE-C- 560 324**
**US-A-2 903 389**
**US-A-3 055 058**
**US-A-4 106 970**

(73) Proprietor: **Van Dalen, Hendrik**
**Op de Vey 64**
**NL-6165 CD Geleen (NL)**

(72) Inventor: **Van Dalen, Hendrik**
**Op de Vey 64**
**NL-6165 CD Geleen (NL)**

(74) Representative: **Leherte, Georges Maurice**
**Lucien Marie et al**
**Octrooibureau DSM P.O.Box 9**
**NL-6160 MA Geleen (NL)**

Courier Press, Leamington Spa, England.

EP 0 054 084 B1

## Description

The invention relates to the manufacture of reinforced products of synthetic material, in which the air present in the reinforcement material in the form of enclosures is expelled by means of the vapour of a medium, before the impregnation of the reinforcement with a synthetic material.

Such a process is described in for instance DE—C—560.324.

In this known process the medium is provided to reinforcement material as a vapour. For this reason the medium is not able to expel the air completely. To an air-gas mixture it applies that the pressure fraction of the gas equals the corresponding volume fraction of the gas. In the formula:

$$\frac{P_g}{P_g+P_l} = \frac{V_g}{V_g+V_l}$$

In this formula:
$P_g$=gas pressure
$P_l$=air pressure
$V_g$=gas volume
$V_l$=air volume.
Moreover, it applies to a gas mixture:

$$P_{total\ pressure}=P_o=P_g+P_l.$$

It follows that only for $P_g \geq P_o$ a volume fraction of the gas of 100% can exist. If, however, the gas pressure $P_g < P_o$, then the volume fraction is $P_g/P_o$ at the most. Thus, the enclosed air can only be completely expelled and replaced if the vapour pressure of the, gaseous, medium is equal to or exceeds the ambient pressure. This means that in the known process air-gas mixture enclosures are present, which are as harmful to the finished product as pure air enclosures.

It is the purpose of the present invention to overcome this drawback and to provide a process, by means of which the complete expelling of air enclosures is guaranteed under all circumstances.

This is obtained by the process that is defined in claim 1. During the stage of the expelling or replacement of the air enclosures the pressure and the temperature are set in such way, that the vapour pressure of the medium concerned is equal to or greater than the ambient pressure and the medium is therefore in the gaseous aggregation state, and during and/or after the impregnation the pressure and the temperature are set in such a way, that the vapour pressure of the medium concerned is exceeded and the medium is in the liquid aggregation state.

Thus all air enclosures are replaced by gas enclosures, which during or after the impregnation, followed by the increase of the pressure and/or decrease of the temperature, pass into liquid enclosures of a negligible volume, which have no harmful influence on the finished product.

If the density of the fibre reinforcement is high, in which case the flow resistance is high and variable, it appears that gas chooses the way of the least resistance, so that at several places no replacement of the air enclosure occurs. It is therefore necessary, in order to guarantee the expelling of the air enclosures under all circumstances, that the medium in its gaseous aggregation state is supplied by evaporation from the fibre reinforcement, for which purpose the fibre reinforcement must be moistened with the medium concerned in advance. This previous moistening of the fibre reinforcement can take place in several ways, e.g. by condensation, immersion, etc.

The raw material for the fibre reinforcement is preferably a fibre with a diameter of 5 to 100 μm, and a length of some millimetres to endless fibres. Longer fibres can be united into bundles, so-called strands. Such strands can be used in several ways as reinforcement material, e.g. single or with a number of strands combined into thicker bundles, the so-called rovings. The strands or rovings may also be cut into short pieces and combined into mats, or be woven into a fabric structure. These types of fibre reinforcements can be impregnated with the synthetic material in several ways, e.g. by applying it manually, by (vacuum) die casting, by winding, etc. The synthetic material may be thermoplastic as well as thermosetting.

From DE—A—1 954 070 a process for the manufacture of reinforced products of synthetic material is known, in which process the air present in the, preferably fibrous, reinforcement in the form of enclosures is expelled before the impregnation of the reinforcement with a synthetic material by means of the vapour of a medium, whereby the pressure and the temperature are set during the stage of the replacement of the air enclosures in such a way, that the vapour pressure of the medium concerned is equal to or higher than the ambient pressure and the medium is in the gaseous aggregation state.

From US—A—2 903 389 a similar process for the manufacture of void free reinforced products of synthetic material, preferably unsaturated polyester, is known, in which process the air present in the, preferably fibrous, reinforcement in the form of enclosures is expelled before the impregnation of the reinforcement with the synthetic material by means of a gaseous vinyl monomer which is reactive with the unsaturated polyester resin. The polyester resin can be thermosetting or thermoplastic.

In general the air enclosures present in a fibre reinforcement can be divided into:

a) microscopic air enclosures between the elementary fibres of the strands or rovings, and

b) macroscopic air enclosures between the strands and/or the fabric layers. These macroscopic air enclosures also include air accumulations in 'dead' corners of a die if a die, in which the impregnation takes place, is used for giving directly a certain final shape to be impregnated fabric reinforcement.

The choice of the medium to be used depends on several criteria, such as the manufacturing process to be used, the working pressures and temperatures and the materials to be used. In the choice of the medium the following conditions must be met as such as possible:

— suitable vapour pressure course,
— lower melting point than the synthetic material,
— having no adverse effect on the synthetic material or the reinforcement and if possible being soluble in the liquid synthetic material,
— presenting no risk or a negligible risk regarding flammability and toxicity, if adequate measures are taken,
— not corrosive,
— inexpensive.

Suitable media comprise among others aliphatic or cycloaliphatic hydrocarbons such as i.a. pentane or heptane, alcohols such as i.a. ethanol, ketones such as i.a. acetone and methylethylketone, esters of carboxylic acids such as i.a. ethylacetate, butylacetate, methylpropionate, nitriles such as acetonitrile, halogenated or perhalogenated hydrocarbons such as i.a. trichloroethane, bromofluoroethane and tetrachloropropane.

One may also use unsaturated monomeric compounds such as i.a. styrene, methylacrylate, ethylacrylate, butylacrylate or methylmethacrylate. Such compounds are particularly useful for the preimpregnation of reinforcing material in connection with the production of articles based on unsaturated polyester.

One can even use water as the medium, in those cases where minute amounts of water dispersed in the finished article are not harmful.

The process according to the invention can be used in connection with a wide variety of synthetic polymeric materials such as unsaturated polyesters, epoxy resins, phenol-formaldehyde resins, diallylphthalate resins, and thermoplastic resins such as i.a. polyethylene, polypropylene, polyvinylchloride, polyester and polyamide. The invention can be used in connection with a variety of techniques, such as i.a. die-casting and vacuum die-casting, winding of fiber material impregnated with thermosetting material, production of sheet-material by curing sheets of woven or non-woven fibers, impregnated with thermosetting material, and production of thermoformable sheets by calendering a sheet of woven or non-woven fibers with a thermoplastic resin.

The process according to the invention can also be used to avoid air-entrapment in the production of articles containing a particulate non-fibrous reinforcing material.

The following examples will illustrate the invention.

Example I
Vacuum die casting method

This process is used when top quality products are desired with a high fibre content and very small dimension tolerances.

In this case unsaturated polyester is used as a synthetic material, glass fibre as a reinforcement and acetone as a replacement medium.

The reinforcement is first soaked in acetone and then enclosed in a die. One side of the die is connected to a polyester holder, and the other side to an underpressure source, e.g. a vacuum pump. Then the valve in the polyester supply line is closed.

Subsequently the pressure in the die is reduced through the underpressure source until the vapour tension of acetone. This causes the acetone to boil and evaporate from the reinforcement, the medium supplied being evacuated through the underpressure connection. As the temperature of the liquid acetone in the reinforcement drops further and further because of the continuous withdrawal of evaporation heat therefrom, also the corresponding vapour tension becomes lower and lower, as this is dependent solely on the temperature. Therefore the die pressure must be lower and lower. To avoid this and to obtain a fast evaporation, heating of the die is recommended. If all acetone has evaporated from the reinforcement, the air has been replaced almost completely by gaseous acetone. Then the underpressure connection is closed and the polyester is cast by opening the supply line. When the reinforcement has been impregnated, there are still gaseous acetone enclosures. When the pressure in the die is then increased to the atmospheric value, these gaseous enclosures will pass into liquid enclosures. These very small liquid enclosures will dissolve completely in the liquid polyester and thus have no harmful influence on the finished product.

Example II
Die casting method

This process is used for the manufacture of large to medium large, curved or flat plate constructions with a low fibre content, such as caravan panels, boats, loading troughs, cabins, etc. Use is made of only a small underpressure, namely 93—99 kPa absolute. The problem on this process is to avoid large to very large air enclosures, which may occur as the result of the so-called 'dead' corners in the die. This may cause the percentage of rejections to rise to 30%.

In this example use is made of unsaturated polyester as a synthetic material, of a glass fibre mat as a reinforcement and of ethanol as a replacement medium.

As the fibre content is low, use is made of an external medium supply with the advantage of a short replacement time.

The process is as follows. First the voluminous mat reinforcement is enclosed in the die. Then the die is heated to some degrees above the boiling temperature of ethanol at atmospheric pressure, namely 78°C. Subsequently warm ethanol vapour of 78°C is led through the reinforcement through the external medium supply, until almost all air has been replaced by the vapour. Then polyester of 78°C is supplied. Thereafter the die is cooled, so that the ethanol vapour enclosures pass into liquid enclosures, which dissolve in the polyester. In this condition the product can harden. Again the dissolved ethanol has no harmful influence on the finished product.

The advantage of this process is that the air is replaced at a small overpressure, so that no sealing problems occur. This means that no high requirements have to be set to the sealing of the die, which may therefore be simple.

Example III
Mechanical impregnation of a cloth reinforcement

This process is used for the manufacture of plate material, consisting of one or more layers of impregnated glass fibre cloth.

In this example use is made of unsaturated polyester as synthetic material, glass fibre as reinforcement and ethanol as replacement medium.

As the glass fibre content is high, use is made of internal medium supply through evaporation from the reinforcement.

For reasons of clarity, first the outlines of this plate manufacturing process will be explained.

The raw material is glass fibre cloth. This cloth is soaked with synthetic material by means of an impregnating mechanism, whereafter the intermediate product obtained in this way is placed on a conveyor belt, on which it may harden or solidify. The belt speed equals the output speed of the mechanism. Finally the hardened or solidified material is cut to the desired lengths.

The impregnating mechanism has a dual function, namely the air replacement and the impregnation proper.

The air replacement takes place in a long, slot-shaped space, in which the ethanol, which has been supplied previously by means of sprayers, is evaporated by means of radiant heat. In this way the gaseous ethanol replaces the air in the air enclosures.

The impregnation takes place through a pair of heated rollers, to which two supply devices continuously supply the right amount of polyester. The polyester has a temperature which equals the boiling temperature of ethanol at atmospheric pressure. Thus condensation of ethanol on the polyester is avoided. During the impregnation ethanol vapour enclosures are created, which, however, pass into liquid enclosures when the polyester cools during the hardening and which can dissolve completely in the synthetic material. The finished product is again free from air.

The advantages of this process are the much higher production speeds that can be used, a quality that can be reproduced accurately, and the possibility of impregnating a number of fabric layers simultaneously, so that a multilayer plate can be manufactured in one single run.

**Claims**

1. Process for the manufacture of fiber-reinforced products of synthetic material, comprising moistening the fiber reinforcement with a medium, at an ambient pressure and temperature such that said medium is in the liquid state; setting the ambient pressure and/or temperature to a value such that the vapour pressure of the medium is at least equal to the ambient pressure, until substantially all entrapped air has been expelled and replaced by the vapour of said medium; impregnating the fibrous reinforcement with the synthetic material and causing the temperature and the ambient pressure to assume a value at which the vapour pressure of the medium is lower than the ambient pressure, whereby condensation of the medium occurs.

2. Process according to claim 1, characterized in that the expelling medium is selected from aliphatic or cycloaliphatic hydrocarbons, alcohols, ketones, esters of carboxylic acid, nitriles, halogenated or perhalogenated hydrocarbons, water and unsaturated monomeric compounds such as i.a. styrene and acrylic monomeric compounds.

3. Process according to claim 1 or 2 characterized in that the synthetic material is selected from unsaturated polyesters, epoxy resins, phenol-formaldehyde resins, diallyl-phthalate resins and thermoplastic resins.

4. Process according to any one of claims 1 to 3 characterized in that the moistening of the fibrous reinforcement with the expelling medium is carried out by spraying said medium in the liquid state over the fibrous reinforcement.

5. Process according to any one of claims 1 to 3, characterized in that the moistening of the fibrous reinforcement with the expelling medium is carried out by immersion of the fibrous reinforcement in said medium in the liquid state.

6. Process according to any one of claims 1 to 3, characterized in that the moistening of the fibrous reinforcement is carried out by condensation of the vapour of said medium on the fibrous reinforcement.

**Patentansprüche**

1. Verfahren zur Herstellung von faserverstärkten Produkten aus synthetischem Material, dadurch gekennzeichnet, daß man die Faserverstärkung mit einem Medium bei einem solchen Umgebungsdruck und einer solchen Umgebungstemperatur, daß das Medium in flüssigem Zustand vorliegt, anfeuchtet; den Umgebungsdruck und/oder die Umgebungstemperatur auf einen solchen Wert einstellt, daß der Dampfdruck des Mediums wenigstens gleich dem Umgebungsdruck ist, bis daß die eingeschlossene Luft wesentlich, verdrängt und durch den Dampf des Mediums ersetzt ist; die Faserverstärkung mit dem synthetischen Material imprägniert und die Temperatur und den Umgebungsdruck auf einen Wert bringt, bei welchem der Dampfdruck des Mediums niedriger ist als der Umgebungsdruck, wobei eine Kondensation des Mediums erfolgt.

2. Verfahren nach Anspruch 1, dadurch gekennzeichnet, daß das verdrängende Medium aus der Gruppe umfassend aliphatische oder cycloaliphatische Kohlenwasserstoffe, Alkohole, Ketone, Carbonsäureester, Nitrile, halogenierte oder perhalogenierte Kohlenwasserstoffe, Wasser und ungesättigte monomere Verbindungen, wie u.a. Styrol und monomere Acrylverbindungen, ausgewählt ist.

3. Verfahren nach Anspruch 1 oder 2, dadurch gekennzeichnet, daß das synthetische Material aus der Gruppe umfassend ungesättigte Polyester, Epoxyharze, Phenol-Formaldehydharze, Diallylphthalatharze und thermoplastische Harze, ausgewählt ist.

4. Verfahren nach einem der Ansprüche 1 bis 3, dadurch gekennzeichnet, daß die Befeuchtung der Faserverstärkung mit dem Verdrängungsmedium durchgeführt wird, indem man das in flüssigem Zustand vorliegende Medium auf die Faserverstärkung aufsprüht.

5. Verfahren nach einem der Ansprüche 1 bis 3, dadurch gekennzeichnet, daß die Befeuchtung der Faserverstärkung mit dem Verdrängungsmedium durchgeführt wird, indem man die Faserverstärkung in das in flüssigem Zustand vorliegende Medium eintaucht.

6. Verfahren nach einem der Ansprüche 1 bis 3, dadurch gekennzeichnet, daß die Befeuchtung der Faserverstärkung durchgeführt wird, indem man den Dampf des Mediums auf der Faserverstärkung kondensiert.

## Revendications

1. Procédé de fabrication de produits en matière synthétique renforcés par des fibres, consistant à humidifer le renforcement fibreux avec un milieu, à pression athmosphérique et à température ambiante, de manière que ledit milieu soit à l'état liquide; à établir la pression athmosphérique et/ou la température a une valeur telle que la tension de vapeur du milieu soit au moins égale à la pression athmosphérique, jusqu'à ce que pratiquement la totalité de l'air emprisonné ait été expulsée et remplacée par la vapeur dudit milieu; à imprégner le renforcement fibreux avec la matière synthétique et à obliger la température et la pression à prendre des valeurs auxquelles la tension de vapeur du milieu est plus basse que la pression athmosphérique, de sorte que le milieu est condensé.

2. Procédé selon la revendication 1, caractérisé en ce qu'on choisit le milieu d'expulsion parmi des hydrocarbures aliphatiques ou cycloaliphatiques, les alcools, les cétones, les esters d'acides carboxyliques, les nitriles, les hydrocarbures alogénés ou peralogénés, l'eau et les composés monomères insaturés tels que, notamment le styrène et les composés acryliques monomères.

3. Procédé selon la revendication 1 ou 2, caractérisé en ce que la matière synthétique est choisie parmi les polyesters insaturés, les résines époxy, les résines phénol-formaldéhyde, les résines phtalate de diallyle et les résines thermoplastiques.

4. Procédé selon l'une quelconque des revendications 1 à 3, caractérisé en ce qu'on effectue l'humidification du renforcement fibreux par le milieu d'expulsion en pulvérisant ledit milieu à l'état liquide sur le renforcement fibreux.

5. Procédé selon l'une des revendications 1 à 3, caractérisé en ce qu'on effectue l'humidification du renforcement fibreux par le milieu d'expulsion par l'immersion du renforcement fibreux dans ledit milieu à l'état liquide.

6. Procédé selon l'une quelconque des revendications 1 à 3, caractérisé en ce qu'on effectue l'humidification du renforcement fibreux par condensation de la vapeur dudit milieu sur le renforcement fibreux.